# EUROPÄISCHE PATENTSCHRIFT

(11) **EP 3 016 756 B1**
(45) Veröffentlichungstag und Bekanntmachung des Hinweises auf die Patenterteilung: **04.03.2020**
(21) Anmeldenummer: 14747717.8
(22) Anmeldetag: 27.06.2014
(51) Int. Cl.: B21D 5/02, F16C 29/02, B21D 37/04

(54) **BIEGEPRESSE ODER ABKANTPRESSE**
BENDING PRESS OR PRESS BRAKE
PRESSE DE CINTRAGE OU PRESSE PLIEUSE

(30) Priorität: 03.07.2013 DE 202013005962 U
(43) Veröffentlichungstag der Anmeldung: 11.05.2016
(73) Patentinhaber: Bystronic Laser AG, CH-3362 Niederoenz (CH)
(72) Erfinder: SEIBERT, Friedemann, 67659 Kaiserslautern (DE)
(74) Vertreter: Schwarz und Baldus Patentanwälte
(86) Internationale Anmeldenummer: PCT/IB2014/062652
(87) Internationale Veröffentlichungsnummer: WO 2015/001454

(56) Entgegenhaltungen:
- JP-A- S57 199 523
- US-A- 5 146 774
- US-A- 5 354 168

## Beschreibung

Die Erfindung betrifft eine Biegepresse oder eine Abkantpresse mit zwei, als Matrize und Stempel ausgeführten Werkzeughälften, die relativ zueinander bewegbar sind, und mit einer Plattform, insbesondere einem Tisch, wobei eine Werkzeughälfte mittels eines Lagers an der Plattform verschiebbar gelagert ist. Solch eine Biegepresse ist zum Beispiel in der US-A-5146774 offenbart.

Bei Biegepressen, insbesondere für das Biegen oder Abkanten von Blechstücken, ist es bekannt, Unterwerkzeuge auf dem Tisch der Werkzeugmaschine verschiebbar zu lagern, einerseits zum Justieren des Unterwerkzeuges und andererseits zum Austauschen des Unterwerkzeuges. Zurzeit werden zur Minimierung des Verschleisses von Unterwerkzeugen und Tischen spezielle Härteverfahren für die aneinander gleitenden Flächen angewandt und Gleitöle an der Kontaktfläche eingesetzt.

Nachteil dieser Vorgehensweise ist der Verzug beim Härten der Tische bzw. Werkzeuge und der hohe Aufwand in der Fertigung. Zudem werden oft selbst in gehärteten Oberflächen der Tische Beschädigungen festgestellt, da der Zunder von dem zu bearbeitenden Blech eine höhere Härte aufweist. Diese Beschädigungen entstehen durch das Verschieben der Unterwerkzeuge, die zumeist als Matrizen ausgebildet sind, auf dem Tisch, vornehmlich wenn Schmutz oder Zunder zwischen Matrize und Tisch vorhanden ist.

Die Erfindung stellt sich die Aufgabe, diese Nachteile zu beseitigen und eine Biegepresse oder eine Abkantpresse bereitzustellen, bei der keine Beschädigungen durch das Verschieben eines Werkzeuges bzw. Werkzeughälfte an der Plattform entstehen. Verunreinigungen und Zunder sollen dabei von der Lagerfläche möglichst ferngehalten werden. Das Verschieben der Werkzeughälfte soll gleichzeitig möglichst reibungsfrei erfolgen. Die Lösung soll zuverlässig, langlebig, kostengünstig und gegebenenfalls auf bestehende Biegepressen oder Abkantpressen nachrüstbar sein.

Diese Aufgabe wird mit einer eingangs erwähnten Biegepresse, Gesenkbiegepresse, Abkantpresse oder dergleichen dadurch gelöst, dass das Lager ein mit einem gasförmigen Medium beaufschlagbares Gaslager, insbesondere ein Luftlager, mit Gasaustrittsöffnungen in der Lagerfläche zur Erzeugung eines Gaspolsters ist.

Dadurch kann die Werkzeughälfte schwebend und damit in hohem Mass reibungsfrei auf dem entstehenden Gas- bzw. Luftpolster verschoben werden. Ein zusätzlicher positiver Effekt entsteht durch den Gasstrom aus den Gasaustrittsöffnungen, da diesen den Schmutz und/oder den Zunder wegbläst. So wird die Lagerfläche stets von Verunreinigungen sauber gehalten. Der Verschleiss zwischen den gegeneinander bewegbaren Teilen wird dadurch auf ein Minimum begrenzt.

Als Gaslager wird ein Luftlager bevorzugt, allerdings wäre es durchaus möglich, anstelle von Luft auch andere Gase oder Gasgemische zu verwenden, die z.B. in einem Gasreservoir zur Verfügung stehen.

Die verschiebbare Lagerung der Werkzeughälfte auf der Plattform dient insbesondere der Justierung und dem Austausch der Werkzeughälfte. Die Werkzeughälfte ist dabei in einer Führung der Plattform geführt. Bei grossen Biegepressen können Unter- und Oberwergzeug beachtliche Längen aufweisen. Die verschiebbare Lagerung an der Plattform bezieht sich dabei vorzugsweise auf eine lineare Bewegung parallel zur Längserstreckung der entsprechenden Werkzeughälfte.

Die Plattform der Biegepresse oder Abkantpresse kann z.B. ein Tisch, ein Sockel, ein Gerüst, ein Gestell, ein Pressbalken und dergleichen sein.

Bevorzugt sind zumindest zwei Gaslager zur Erzeugung eines Gaspolsters zwischen einer Werkzeughälfte und der Plattform vorgesehen, wodurch die entsprechende Werkzeughälfte besonders einfach an der Plattform verschiebbar ist. Besonders bei grossen und somit zumeist schweren Werkzeughälften ist die Anordnung von zwei oder mehreren auf die Werkzeughälfte wirkenden Gaslagern vorteilhaft. Des Weiteren an einer gattungsgemässen Biegepresse oder Abkantpresse mehrere, teilweise unterschiedlich ausgebildete Werkzeughälften hintereinander angeordnet sein, so dass verschiedene Biegevorgänge nacheinander ausführbar sind. Bei der Anordnung von zumindest zwei Gaslagern sind auch bei etwaigen Abmessungsunterschieden insbesondere im Bereich der entsprechenden Lagerflächen der Gaslager diese Werkzeughälften weiterhin einfach an der Plattform verschiebbar.

Bevorzugt ist das Gaslager aus einem porösen Material, insbesondere aus poröser Keramik, gebildet. Dies erlaubt eine kostengünstige Lösung und gewährleistet einen gleichmässigen Gasstrom bzw. Luftpolster.

Bevorzugt ist das Gaslager aus geschäumtem Metall, insbesondere geschäumtem Titan oder geschäumtem Stahl, gebildet, wodurch eine hohe Festigkeit und daher lange Lebensdauer erzielt werden kann.

Bevorzugt umfasst die Biegepresse oder Abkantpresse eine Gasversorgungseinrichtung zur Beaufschlagung des Gaslagers mit einem gasförmigen Medium. Die Gasversorgungseinrichtung ist hier in der Biegepresse oder Abkantpresse mitintegriert, so dass kein externer Anschluss nötig ist. Unter dem Begriff Gasversorgungseinrichtung werden auch Komponenten wie Zuführleitungen verstanden. Eine Gasversorgungseinrichtung kann z.B. aus einer Ansaugleitung bzw. -Öffnung, einem Gebläse bzw. Pumpe, Ventil(en) und einer Zuführleitung bestehen.

Bevorzugt umfasst die Biegepresse oder Abkantpresse eine Fixiereinrichtung, insbesondere Klemmeinrichtung, zur Fixierung der an der Plattform verschiebbar gelagerten Werkzeughälfte relativ zur Plattform. Dies erlaubt eine zuverlässige und fixe Einstellung der Biegepresse oder Abkantpresse. Die Klemmeinrichtung kann z.B. in Form einer Klemmleiste ausgebildet sein, die in arretierter Stellung vorteilhaft seitlich gegen die Werkzeughälfte drückt und diese somit gegen die gegenüberliegende Wand der Führung drückt.

Bevorzugt ist die Fixiereinrichtung mit der Gasversorgungseinrichtung derart gekoppelt, dass bei geschlossener Fixiereinrichtung kein Gas in das Gaslager eingebracht wird. Dadurch kann der Gas- bzw. Energieverbrauch minimiert werden. Die Fixiereinrichtung kann hierfür einen Sensor oder Endschalter aufweisen, der über eine Signalleitung mit der Gasversorgungseinrichtung (gegebenenfalls unter Zwischenschaltung der Maschinensteuerung) verbunden ist. Die Kopplung kann derart erfolgen, dass bei geschlossener, d.h. die Werkzeughälfte arretierender Stellung der Fixiereinrichtung die Gasversorgungseinrichtung abgeschaltet oder ein Zuführventil der Gasversorgungseinrichtung geschlossen wird. Alternativ wäre auch eine mechanische Kopplung möglich.

Bevorzugt ist die an der Plattform verschiebbar gelagerte Werkzeughälfte als Unterwerkzeug ausgebildet und die andere Werkzeughälfte als Oberwerkzeug ausgebildet, wobei das Gaslager zwischen dem Unterwerkzeug und der Plattform ausgebildet ist.

Bevorzugt ist die Gasaustrittsöffnungen aufweisende Lagerfläche ortsfest mit der Plattform ausgebildet. Hier muss die Zuführleitung der Gasversorgungseinrichtung beim Verschieben der Werkzeughälfte nicht mitbewegt werden.

Bevorzugt ist die Gasaustrittsöffnungen aufweisende Lagerfläche ortsfest mit der an der Plattform verschiebbar gelagerten Werkzeughälfte ausgebildet, wobei vorzugsweise die Lagerfläche im Fussbereich einer als Unterwerkzeug ausgebildeten Werkzeughälfte ausgebildet ist. Durch diese Massnahme kann der Gas- bzw. Luftverbrauch minimiert werden, insbesondere da die Führung in der Plattform länger ist als die darin verschiebbare Werkzeughälfte. Die Zuführleitung für das Gas könnte in dieser Ausführungsform nach dem Einbau der Werkzeughälfte in die Plattform an eine dafür vorgesehene Kupplung des Gaslagers angeschlossen werden.

Bevorzugt sitzt die an der Plattform verschiebbar gelagerte Werkzeughälfte in einer Führung, deren Boden zumindest teilweise durch die Lagerfläche des Gaslagers gebildet wird. Dies ermöglicht eine exakte und reibungsfreie Einstellung, insb. der entsprechenden Werkzeughälfte.

Bevorzugt verläuft unterhalb des Gaslagers ein Kanal zur Versorgung des Gaslagers mit einem gasförmigen Medium. Der Kanal (Hohlraum zur Gasversorgung) bildet einen Überdruckbereich, aus dem das Gas durch die Gasaustrittsöffnungen nach oben strömt.

Bevorzugt wird die an der Plattform verschiebbar gelagerte Werkzeughälfte von einer Werkzeughalterung gehalten und ist das Gaslager zwischen Werkzeughalterung und Plattform ausgebildet.

Bevorzugt ist das Gaslager ein Linearlager, wobei die Verschieberichtung der an der Plattform gelagerten Werkzeughälfte im Linearlager im Wesentlichen senkrecht zur Pressrichtung der Werkzeugmaschine steht.

Bevorzugt sind die Werkzeughälften länglich und steht die Verschieberichtung der an der Plattform verschiebbar gelagerten Werkzeughälfte parallel zu ihrer Längserstreckung, was eine konstruktiv einfache Ausgestaltung der Biegepresse oder Abkantpresse ermöglicht.

In einer bevorzugten Ausführungsform wird vorgeschlagen, die Matrize (Unterwerkzeug) oder den Tisch der Biegepresse oder Abkantpresse mit einem Luftlager auszustatten. Dazu wird beispielsweise im Tisch eine poröse Keramik oder geschäumtes Metall eingearbeitet und mit Luft beaufschlagt, so dass die Matrize auf dem entstehenden Luftpolster "schwebend" verschoben werden kann. Ein zusätzlicher Effekt entsteht durch den Luftstrom, der Schmutz oder Zunder wegbläst.

Denkbar ist auch die Matrize an ihrem Fuss mit einem Luftlager (Lagerfläche mit Öffnungen) auszustatten und somit den Luftverbrauch zu minimieren. Zusätzlich wird vorgeschlagen, den Luftstrom nur beim Öffnen der Fixiereinrichtung (Öffnen der Klemmung) anzulegen, sodass der Luftverbrauch minimiert wird. Auch kann an Stelle einer porösen Keramik ein herkömmliches Luftlager (Mikrobohrungen in Druckkammer) verwendet werden.

Vorteilhafte Weiterbildungen sind in den Figuren und in den abhängigen Patentansprüchen dargelegt.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung beschrieben sind. Dabei können die in den Ansprüchen und in der Beschreibung erwähnten Merkmale jeweils einzeln für sich oder in beliebiger Kombination erfindungswesentlich sein.

Die Bezugszeichenliste ist Bestandteil der Offenbarung. Die Figuren werden zusammenhängend und übergreifend beschrieben. Gleiche Bezugszeichen bedeuten gleiche Bauteile.

Es zeigen dabei:
- Fig. 1: eine erfindungsgemässe Biegepresse oder Abkantpresse in Seitenansicht,
- Fig. 2: eine erfindungsgemässe Biegepresse oder Abkantpresse im Schnitt, und
- Fig. 3: eine Variante einer Biegepresse oder Abkantpresse im Schnitt.

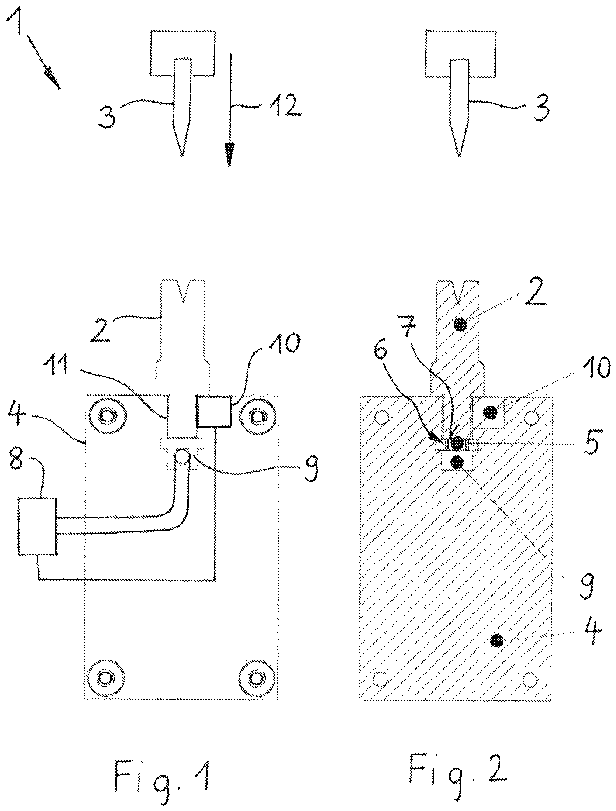

Fig. 1 und 2 zeigen eine Biegepresse 1 oder Abkantpresse mit zwei, als Matrize (bspw. Unterwerkzeug) und Stempel (bspw. Oberwerkzeug) ausgeführten Werkzeughälften 2, 3, die entlang einer Pressrichtung 12 relativ zueinander bewegbar sind.

Eine Plattform 4, insbesondere in Form eines Tisches, trägt eine Werkzeughälfte 2 (Unterwerkzeug), die mittels eines Lagers an der Plattform 4 verschiebbar gelagert ist. Das Lager ist ein mit einem gasförmigen Medium beaufschlagbares Gaslager 5, insbesondere ein Luftlager, mit Gasaustrittsöffnungen 6 in der Lagerfläche 7 (Fig. 2) zur Erzeugung eines Gaspolsters. Auf dem Gaspolster kann die Werkzeughälfte 2 schwebend verschoben werden.

Das Gaslager 5 kann aus einem porösen Material, insbesondere aus poröser Keramik, oder aus geschäumtem Metall, insbesondere geschäumtem Titan oder geschäumtem Stahl, gebildet sein. Hier bilden die Poren die Gasaustrittsöffnungen an der Lagerfläche 7.

In einer nicht erfindungsgemässen Alternative kann auch eine Lagerfläche 7 mit Bohrungen als Gasaustrittsöffnungen 6 verwendet werden.

In Fig. 1 ist zu sehen, dass die Biegepresse 1 oder Abkantpresse eine Gasversorgungseinrichtung 8 zur Beaufschlagung des Gaslagers 5 mit einem gasförmigen Medium umfasst. Diese umfasst vorzugsweise ein Gebläse und eine Zuführleitung, die in einen im Inneren der Plattform 4 verlaufenden Kanal 6 mündet, der unterhalb des Gaslagers 5 verläuft und dieses mit einem gasförmigen Medium versorgt.

Die Biegepresse 1 oder Abkantpresse aus Fig. 1 weist auch eine Fixiereinrichtung 10, insbesondere eine Klemmeinrichtung in Form einer Klemmleiste, auf zur Fixierung der an der Plattform 4 verschiebbar gelagerten Werkzeughälfte 2 relativ zur Plattform 4.

In der dargestellten bevorzugten Ausführungsform ist die Fixiereinrichtung 10 mit der Gasversorgungseinrichtung 8 derart gekoppelt, dass bei geschlossener Fixiereinrichtung 10 kein Gas in das Gaslager 5 eingebracht wird. Die Fixiereinrichtung 10 kann hierfür einen Sensor oder Endschalter aufweisen, der über eine Signalleitung mit der Gasversorgungseinrichtung (gegebenenfalls unter Zwischenschaltung einer Maschinensteuerung) verbunden ist. Die Kopplung kann derart erfolgen, dass bei geschlossener, d.h. die Werkzeughälfte 2 arretierender Stellung der Fixiereinrichtung 10, die Gasversorgungseinrichtung 8 abgeschaltet oder ein Zuführventil der Gasversorgungseinrichtung 8 geschlossen wird. Alternativ wäre auch eine mechanische Kopplung möglich. Jedenfalls strömt bei arretierter Werkzeughälfte 2 vorteilhaft kein Gas aus der Lagerfläche 7.

Die an der Plattform 4 verschiebbar gelagerte Werkzeughälfte 2 ist als Unterwerkzeug ausgebildet und die andere Werkzeughälfte 3 als Oberwerkzeug ausgebildet. Das Gaslager 5 befindet sich zwischen dem Unterwerkzeug und der Plattform 4. Die an der Plattform 4 verschiebbar gelagerte Werkzeughälfte 2 könnte auch von einer Werkzeughalterung (nicht dargestellt) gehalten werden. In diesem Fall könnte das Gaslager 5 zwischen Werkzeughalterung und Plattform 4 ausgebildet sein.

In der in Fig. 1 und 2 dargestellten Ausführungsform ist die Lagerfläche 7 mit den Gasaustrittsöffnungen 6 ortsfest mit der Plattform 4 ausgebildet. Denkbar wäre selbstverständlich auch, die Gasaustrittsöffnungen 6 aufweisende Lagerfläche 7 ortsfest mit der Werkzeughälfte 2 auszubilden, z.B. im Fussbereich des Unterwerkzeuges.

Die an der Plattform 4 verschiebbar gelagerte Werkzeughälfte 2 sitzt in einer Führung 11, deren Boden zumindest teilweise durch die Lagerfläche 7 des Gaslagers 5 gebildet wird.

Das Gaslager 5 ist vorliegend ein Linearlager, wobei die Verschieberichtung der an der Plattform 4 gelagerten Werkzeughälfte 2 im Linearlager im Wesentlichen senkrecht zur Pressrichtung 12 (Fig. 1) der Werkzeugmaschine 1 steht. Die Werkzeughälften 2, 3 sind länglich und die Verschieberichtung der an der Plattform 4 verschiebbar gelagerten Werkzeughälfte 2 steht parallel zu ihrer Längserstreckung.

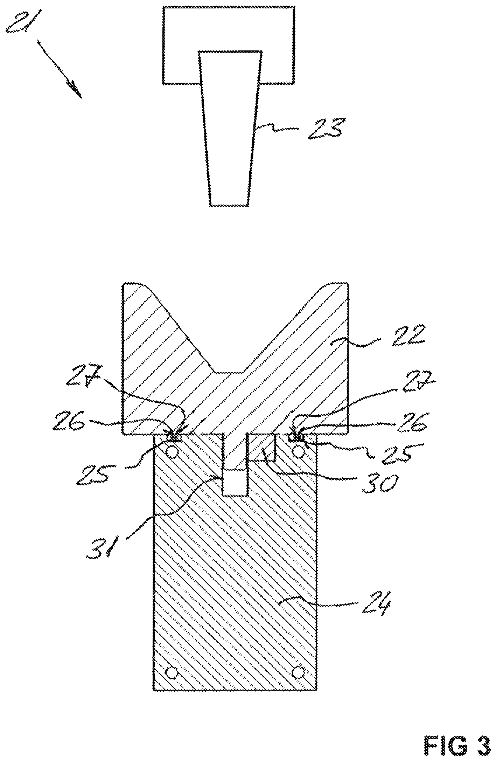

Die in der Fig. 3 gezeigte Biegepresse 21 oder Abkantpresse unterscheidet sich von der zuvor beschriebenen Biegepresse 1 gemäss den Fig. 1 und 2 lediglich durch die Ausgestaltung der Plattform 24. Zur Erzeugung eines Gaspolsters zwischen der Werkzeughälfte 22 und der Plattform 24 sind beispielhaft zwei Gaslager 25 an der Plattform 24 vorgesehen. Die Gaslager 25 sind beidseitig der Führung 31 für die Werkzeughälfte 22 an der Plattform 24 angeordnet. Vorteilhaft sind die Gaslager 25 als Linearlager ausgebildet und verlaufen im Wesentlichen parallel zueinander sowie parallel zu der Führung 31.

Im Übrigen gelten die vorgenannten Ausführungen zu der zuvor beschriebenen Biegepresse 1 gemäss den Fig. 1 und 2 auch für die Biegepresse 21 beziehungsweise sind auf die übertragbar. Dies gilt insbesondere für die Ausführungen zur Gasversorgungseinrichtung 8.

Die Erfindung ist nicht auf die dargestellten Ausführungsformen und deren Merkmale beschränkt, sondern kann vielfach abgewandelt und erweitert werden. Insbesondere ist es möglich, durch Kombination der beschriebenen und dargestellten Merkmale weitere Ausführungsvarianten zu verwirklichen, ohne den Rahmen der Erfindung zu verlassen.

**Bezugszeichenliste**

| | | | |
|---|---|---|---|
| 1 | Biegepresse | 21 | Biegepresse |
| 2 | Werkzeughälfte | 22 | Werkzeughälfte |
| 3 | Werkzeughälfte | 23 | Werkzeughälfte |
| 4 | Plattform | 24 | Plattform |
| 5 | Gaslager | 25 | Gaslager |
| 6 | Gasaustrittsöffnungen | 26 | Gasaustrittsöffnungen |
| 7 | Lagerfläche | 27 | Lagerfläche |
| 8 | Gasversorgungseinrichtung | | |
| 9 | Kanal | | |
| 10 | Fixiereinrichtung | 30 | Fixiereinrichtung |
| 11 | Führung | 31 | Führung |
| 12 | Pressrichtung | | |

## Patentansprüche

1. Biegepresse (1; 21) oder Abkantpresse mit zwei, als Matrize und Stempel ausgeführten Werkzeughälften (2, 3; 22, 23), die relativ zueinander bewegbar sind, und mit einer Plattform (4; 24), insbesondere einem Tisch, wobei eine Werkzeughälfte (2; 22) mittels eines Lagers an der Plattform (4; 24) verschiebbar gelagert ist, **dadurch gekennzeichnet, dass** das Lager ein mit einem gasförmigen Medium beaufschlagbares Gaslager (5; 25), insbesondere ein Luftlager, mit Gasaustrittsöffnungen (6; 26) in der Lagerfläche (7; 27) zur Erzeugung eines Gaspolsters ist.

2. Biegepresse oder Abkantpresse nach Anspruch 1, **dadurch gekennzeichnet, dass** zumindest zwei Gaslager (25) zur Erzeugung eines Gaspolsters zwischen der Werkzeughälfte (22) und der Plattform (24) vorgesehen sind.

3. Biegepresse oder Abkantpresse nach Anspruch 1 oder 2, **dadurch gekennzeichnet, dass** das Gaslager (5; 25) aus einem porösen Material, insbesondere aus poröser Keramik, gebildet ist.

4. Biegepresse oder Abkantpresse nach Anspruch 1 oder 2, **dadurch gekennzeichnet, dass** das Gaslager (5; 25) aus geschäumtem Metall, insbesondere geschäumtem Titan oder geschäumtem Stahl, gebildet ist.

5. Biegepresse oder Abkantpresse nach einem der vorhergehenden Ansprüche, **dadurch gekennzeichnet, dass** die Biegepresse (1; 21) oder Abkantpresse eine Gasversorgungseinrichtung (8) zur Beaufschlagung des Gaslagers (5) mit einem gasförmigen Medium umfasst.

6. Biegepresse oder Abkantpresse nach einem der vorhergehenden Ansprüche, **dadurch gekennzeichnet, dass** die Biegepresse (1; 21) oder Abkantpresse eine Fixiereinrichtung (10; 30), insbesondere Klemmeinrichtung, zur Fixierung der an der Plattform (4; 24) verschiebbar gelagerten Werkzeughälfte (2; 22) relativ zur Plattform (4; 24) umfasst.

7. Biegepresse oder Abkantpresse nach Anspruch 6, **dadurch gekennzeichnet, dass** die Fixiereinrichtung (10; 30) mit der Gasversorgungseinrichtung (8) derart gekoppelt ist, dass bei geschlossener Fixiereinrichtung (10; 30) kein Gas in das Gaslager (5; 25) eingebracht wird.

8. Biegepresse oder Abkantpresse nach einem der vorhergehenden Ansprüche, **dadurch gekennzeichnet, dass** die an der Plattform (4; 24) verschiebbar gelagerte Werkzeughälfte (2; 22) als Unterwerkzeug ausgebildet ist und die andere Werkzeughälfte (3; 23) als Oberwerkzeug ausgebildet ist, wobei das Gaslager (5; 25) zwischen dem Unterwerkzeug (2; 22) und der Plattform (4; 24) ausgebildet ist.

9. Biegepresse oder Abkantpresse nach einem der vorhergehenden Ansprüche, **dadurch gekennzeichnet, dass** die Gasaustrittsöffnungen (6; 26) aufweisende Lagerfläche (7; 27) ortsfest mit der Plattform (4; 24) ausgebildet ist.

10. Biegepresse oder Abkantpresse nach einem der vorhergehenden Ansprüche, **dadurch gekennzeichnet, dass** die Gasaustrittsöffnungen (6) aufweisende Lagerfläche (7) ortsfest mit der an der Plattform (4) verschiebbar gelagerten Werkzeughälfte (2) ausgebildet ist, wobei vorzugsweise die Lagerfläche (7) im Fussbereich einer als Unterwerkzeug ausgebildeten Werkzeughälfte (2) ausgebildet ist.

11. Biegepresse oder Abkantpresse nach einem der vorhergehenden Ansprüche, **dadurch gekennzeichnet, dass** die an der Plattform (4) verschiebbar gelagerte Werkzeughälfte (2) in einer Führung (11) sitzt, deren Boden zumindest teilweise durch die Lagerfläche (7) des Gaslagers (5) gebildet wird.

12. Biegepresse oder Abkantpresse nach einem der vorhergehenden Ansprüche, **dadurch gekennzeichnet, dass** unterhalb des Gaslagers (5) ein Kanal (9) zur Versorgung des Gaslagers (5) mit einem gasförmigen Medium verläuft.

13. Biegepresse oder Abkantpresse nach einem der vorhergehenden Ansprüche, **dadurch gekennzeichnet, dass** die an der Plattform (4) verschiebbar gelagerte Werkzeughälfte (2) von einer Werkzeughalterung gehalten wird und das Gaslager (5) zwischen Werkzeughalterung und Plattform (4) ausgebildet ist.

14. Biegepresse oder Abkantpresse nach einem der vorhergehenden Ansprüche, **dadurch gekennzeichnet, dass** das Gaslager (5; 25) ein Linearlager ist, wobei die Verschieberichtung der an der Plattform (4; 24) gelagerten Werkzeughälfte (2; 22) im Linearlager im Wesentlichen senkrecht zur Pressrichtung (12) der Werkzeugmaschine (1; 21) steht.

15. Biegepresse oder Abkantpresse nach einem der vorhergehenden Ansprüche, **dadurch gekennzeichnet, dass** die Werkzeughälften (2, 3; 22, 23) länglich sind und die Verschieberichtung der an der Plattform (4; 24) verschiebbar gelagerten Werkzeughälfte (2; 22) parallel zu ihrer Längserstreckung steht.

## Claims

1. A bending press (1; 21) or press brake comprising two tool halves (2, 3; 22, 23) designed as dies and punches, which can be moved relative to one another, and comprising a platform (4; 24), in particular a table, wherein a tool half (2; 22) is displaceably mounted on the platform (4; 24) by means of a bearing, **characterised in that** the bearing is a gas bearing (5; 25) to which a gaseous medium can be applied, in particular an air bearing, having gas outlet openings (6; 26) in the bearing surface (7; 27) for generating a gas cushion.

2. The bending press or press brake according to claim 1, **characterised in that** at least two gas bearings (25) are provided for generating a gas cushion between the tool half (22) and the platform (24).

3. The bending press or press brake according to claim 1 or 2, **characterised in that** the gas bearing (5; 25) is formed from a porous material, in particular from porous ceramic.

4. The bending press or press brake according to claim 1 or 2, **characterised in that** the gas bearing (5; 25) is formed from foamed metal, in particular foamed titanium or foamed steel.

5. The bending press or press brake according to one of the preceding claims, **characterised in that** the bending press (1; 21) or press brake comprises a gas supply device (8) for applying a gaseous medium to the gas bearing (5).

6. The bending press or press brake according to one of the preceding claims, **characterised in that** the bending press (1; 21) or press brake comprises a fixing device (10; 30), in particular a clamping device, for fixing the tool half (2; 22) displaceably mounted on the platform (4; 24) relative to the platform (4; 24).

7. The bending press or press brake according to claim 6, **characterised in that** the fixing device (10; 30) is coupled to the gas supply device (8) such that no gas is introduced into the gas bearing (5; 25) when the fixing device (10; 30) is closed.

8. The bending press or press brake according to one of the preceding claims, **characterised in that** the tool half (2; 22) displaceably mounted on the platform (4; 24) is designed as a lower tool and the other tool half (3; 23) is designed as an upper tool, wherein the gas bearing (5; 25) is formed between the lower tool (2; 22) and the platform (4; 24).

9. The bending press or press brake according to one of the preceding claims, **characterised in that** the bearing surface (7; 27) comprising gas outlet openings (6; 26) is stationary with respect to the platform (4; 24).

10. The bending press or press brake according to one of the preceding claims, **characterised in that** the bearing surface (7) comprising gas outlet openings (6) is stationary with respect to the tool half (2) displaceably mounted on the platform (4), wherein the bearing surface (7) is preferably formed in the base region of a tool half (2) designed as a lower tool.

11. The bending press or press brake according to one of the preceding claims, **characterised in that** the tool half (2) displaceably mounted on the platform (4) sits in a guide (11), the bottom of which is at least partially formed by the bearing surface (7) of the gas bearing (5).

12. The bending press or press brake according to one of the preceding claims, **characterised in that** a channel (9) for supplying the gas bearing (5) with a gaseous medium runs below the gas bearing (5).

13. The bending press or press brake according to one of the preceding claims, **characterised in that** the tool half (2) displaceably mounted on the platform (4) is held by a tool holder and the gas bearing (5) is formed between the tool holder and the platform (4).

14. The bending press or press brake according to one of the preceding claims, **characterised in that** the gas bearing (5; 25) is a linear bearing, wherein the direction of displacement of the tool half (2; 22) mounted on the platform (4; 24) in the linear bearing is substantially perpendicular to the pressing direction (12) of the machine tool (1; 21).

15. The bending press or press brake according to one of the preceding claims, **characterised in that** the tool halves (2, 3; 22, 23) are elongated and the direction of displacement of the tool half (2; 22) displaceably mounted on the platform (4; 24) is parallel to the longitudinal extension thereof.

## Revendications

1. Presse de cintrage (1 ; 21) ou presse plieuse comprenant deux moitiés d'outil (2, 3 ; 22, 23) conçues comme des matrices et des poinçons, qui peuvent être déplacées l'une par rapport à l'autre et comprenant une plate-forme (4 ; 24), en particulier une table, une moitié d'outil (2 ; 22) étant montée sur la plate-forme (4 ; 24) de manière à pouvoir être déplacée au moyen d'un palier, **caractérisée en ce que** le palier est un palier à gaz (5 ; 25) auquel peut être appliqué un milieu gazeux, en particulier un palier à air, avec des ouvertures de sortie de gaz (6 ; 26) dans la surface de palier (7 ; 27) pour générer un coussin de gaz.

2. Presse de cintrage ou presse plieuse selon la revendication 1, **caractérisée en ce qu'**au moins deux paliers à gaz (25) sont prévus pour générer un coussin de gaz entre la moitié d'outil (22) et la plate-forme (24).

3. Presse de cintrage ou presse plieuse selon la revendication 1 ou 2, **caractérisée en ce que** le palier à gaz (5 ; 25) est réalisé en un matériau poreux, notamment en céramique poreuse.

4. Presse de cintrage ou presse plieuse selon la revendication 1 ou 2, **caractérisée en ce que** le palier à gaz (5 ; 25) est réalisé en mousse métallique, notamment en mousse de titane ou en mousse d'acier.

5. Presse de cintrage ou presse plieuse selon l'une quelconque des revendications précédentes, **caractérisée en ce que** la presse de cintrage (1 ; 21) ou la presse plieuse comprend un dispositif d'alimentation en gaz (8) pour charger le palier à gaz (5) avec un milieu gazeux.

6. Presse de cintrage ou presse plieuse selon l'une quelconque des revendications précédentes, **caractérisée en ce que** la presse de cintrage (1 ; 21) ou la presse plieuse présente un dispositif de fixation (10 ; 30), notamment un dispositif de serrage, pour fixer la moitié d'outil (2 ; 22) placée de manière à pouvoir être déplacée sur la plate-forme (4 ; 24) par rapport à la plate-forme (4 ; 24).

7. Presse de cintrage ou presse plieuse selon la revendication 6, **caractérisée en ce que** le dispositif de fixation (10 ; 30) est couplé au dispositif d'alimentation en gaz (8) de telle sorte que, lorsque le dispositif de fixation (10 ; 30) est fermé, aucun gaz ne soit introduit dans le palier à gaz (5 ; 25).

8. Presse de cintrage ou presse plieuse selon l'une quelconque des revendications précédentes, **caractérisée en ce que** la moitié d'outil (2 ; 22) montée de manière à pouvoir être déplacée sur la plate-forme (4 ; 24) est conçue comme un outil inférieur et l'autre moitié d'outil (3 ; 23) est conçue comme un outil supérieur, le palier à gaz (5 ; 25) étant formé entre l'outil inférieur (2 ; 22) et la plate-forme (4 ; 24).

9. Presse de cintrage ou presse plieuse selon l'une quelconque des revendications précédentes, **caractérisée en ce que** la surface de palier (7 ; 27) comportant des ouvertures de sortie de gaz (6 ; 26) est conçue pour être immobile avec la plate-forme (4 ; 24).

10. Presse de cintrage ou presse plieuse selon l'une quelconque des revendications précédentes, **caractérisée en ce que** la surface de palier (7) comportant des ouvertures de sortie de gaz (6) est conçue pour être immobile avec la moitié d'outil (2) montée de manière à pouvoir être déplacée sur la plate-forme (4), de préférence la surface de palier (7) étant conçue dans la zone de pied d'une moitié d'outil (2) conçue comme un outil inférieur.

11. Presse de cintrage ou presse plieuse selon l'une quelconque des revendications précédentes, **caractérisée en ce que** la moitié d'outil (2) montée pour pouvoir être déplacée sur la plate-forme (4) repose dans un guide (11) dont le fond est au moins partiellement formé par la surface de palier (7) du palier à gaz (5).

12. Presse de cintrage ou presse plieuse selon l'une quelconque des revendications précédentes, **caractérisée en ce qu'**un canal (9) pour alimenter le palier à gaz (5) en milieu gazeux passe en dessous du palier à gaz (5).

13. Presse de cintrage ou presse plieuse selon l'une quelconque des revendications précédentes, **caractérisée en ce que** la moitié d'outil (2) montée pour pouvoir être déplacée sur la plate-forme (4) est maintenue par un porte-outil et le palier à gaz (5) est formé entre le porte-outil et la plate-forme (4).

14. Presse de cintrage ou presse plieuse selon l'une quelconque des revendications précédentes, **caractérisée en ce que** le palier à gaz (5 ; 25) est un palier linéaire, le sens de déplacement de la moitié d'outil (2 ; 22) montée sur la plate-forme (4 ; 24) dans le palier linéaire étant essentiellement perpendiculaire au sens de pressage (12) de la machine-outil (1 ; 21).

15. Presse de cintrage ou presse plieuse selon l'une quelconque des revendications précédentes, **caractérisée en ce que** les moitiés d'outil (2, 3 ; 22, 23) sont oblongues et le sens de déplacement de la moitié d'outil (2 ; 22) montée de manière à pouvoir être déplacée sur la plate-forme (4 ; 24) est parallèle à leur étendue longitudinale.
